# EUROPEAN PATENT APPLICATION

(11) **EP 1 595 642 A1**
(43) Date of publication of application: **16.11.2005**
(21) Application number: 05010083.3
(22) Date of filing: 10.05.2005
(51) Int. Cl.: B23Q 17/22, G01B 5/012, B23Q 17/24

(54) **Three-dimensional tactile tracer point with magnetic support and measuring process which uses such tracer point**

(30) Priority: 10.05.2004 IT TO20040301
(71) Applicant: ITACA S.R.L., 10127 Torino (IT)
(72) Inventor: Raho, Guglielmo, 10127 Torino (IT)
(74) Representative: Garavelli, Paolo

(57) **Abstract**

A tactile tracer point (1) is disclosed for detecting the position of adjustable supporting elements, comprising a transmitting element for position information of the adjustable supporting element; a magnetic suspension system (20) of the transmitting element of position information; a deflection and movement measurement system (30) of the transmitting element for position information; a communication system (40) to an operator of the deflection of the transmitting element for position information and a verse of such deflection; and mechanical and/or electric connection means of the tactile tracer point (1) to a measurement tool or a machine tool. Besides, a measuring process using such tactile tracer point (1) is described.

## Description

The present invention refers to a three-dimensional tactile tracer point with magnetic support, particularly for centering verification operations, associated with a measuring tool or machine tool, of a adjustable supporting element, in comparison with the nominal position respect to a triad of axis XYZ which such element has to have in the general reference system.

In the art, the term adjustable supporting element defines any body with a geometrically defined shape (spheres, cones, cylinders, mathematically defined surfaces...) belonging to a complex equipment, in general composed of several adjustable supporting elements, adapted to support complex and flexible parts as components in printed plates, plastics, glass fibers and similar in the field of machine tools, particularly three-dimensional measurement tools and machine tools, in order to accurately report the part to the working volume of the machine tool itself.

In case of non-spherical shapes, the adjustable supporting element is replaced by a standard element named Target, which is in precise mechanical relationship with the adjustable supporting element which it thereby represents in a position translated by a known amount, in this way standardizing the contact between the adjustable supporting element or the Target, representative thereof, and the traditional tracer point.

The adjustable supporting element has to be accurately adjusted so that its geometrically-defined surface comes into contact with the surface of the piece to support.

This operation requires the measurement of the real position of the adjustable supporting element and the driving of the adjusting elements joined to the adjustable supporting element itself till the position is correct, within the required tolerances.

In the current state of the art, the measurement operation requires the use of conventional tracer points joined to the measuring tool itself which, due to their own nature, require the measurement of several points in order to establish the position occupied by the adjustable supporting element (for example, in case of a sphere, the measurement points are 5 or 3 knowing the diameter thereof).

Therefore, this operation is of a recursive type repeating many times the cycle with measuring, coordinate printing /displaying, carrying out the adjusting command, until the sensed measurement gives a value lower than the reqired tolerance.

This operating way is very fatiguing and time expensive since during the adjustment, there is no perception of its entity, if not approximately or employing expensive electromechanical systems, which are unjustified if the adjustment operation is rare.

Object of the present invention is solving the aforesaid prior art problems by providing a three-dimensional tactile tracer point with magnetic support able to continuously providing, during the adjusting operation of the position of the adjustable supporting element, three-dimensional deviation information from a central tolerance zone, maintaining the measurement tool or the machine tool locked in its rated position.

Moreover, an object of the present invention is providing a three-dimensional tactile tracer point with magnetic support which allows an operator to continuously perform the adjustments of the adjustable supporting element, having the indication of the direction in which they must be operated for reaching the tolerance zone.

Another object of the present invention is providing a three-dimensional tactile tracer point with magnetic support whose transmission element of the position information of the adjustable supporting element is provided with a magnetic suspension system characterized by low friction coefficients and absence of mechanic clearance, assuring a higher accuracy measurement compared with the known art.

A further object of the present invention is providing a measuring process through the three-dimensional tactile tracer point with magnetic support according to the present invention.

The above and other objects and advantages of the invention, as will appear from the following description, are obtained with a three-dimensional tactile tracer point with magnetic support as disclosed in claim 1 and with a measuring process as disclosed in claim 22. Preferred embodiments and non-trivial variations of the present inventions are the subject matter of the dependent claims.

The present invention will be better described by some preferred embodiments thereof, provided merely as a non-limiting example, with reference to the enclosed drawings, in which:
- FIG. 1 shows a scheme representing an embodiment of the three-dimensional tactile tracer point with magnetic support according to the present invention;
- FIG. 2 shows a scheme representing another embodiment of the tactile tracer point according to the present invention;
- FIG. 3 shows a perspective view of an embodiment of an element of the tactile tracer point according to the present invention;
- FIG. 4 shows a perspective view of another embodiment of an element of the tactile tracer point according to the present invention;
- FIG. 5 shows a perspective view of still another embodiment of an element of the tactile tracer point according to the present invention;
- FIG. 6 shows a schematic representation of a measurement system of the tactile tracer point according to the present invention;
- FIG. 7 shows a diagram representing an operational logic of the measurement system of the tactile tracer point according to the present invention;
- FIG. 8 shows a scheme for processing the signals of the measurement system of the tactile tracer point according to the present invention;
- FIG. 9 shows a perspective view of an embodiment of the tactile tracer point according to the present invention;
- FIG. 10 shows a perspective view of the internal components of the tactile tracer point of FIG. 9;
- FIG. 11 shows a perspective view of some elements of the tactile tracer point of FIG. 9 and 10;
- FIG. 12 shows another perspective view of some elements of the tactile tracer point of FIG. 9, 10 and 11; and
- FIG. 13 shows a block diagram representing the steps of the measuring process according to the present invention.

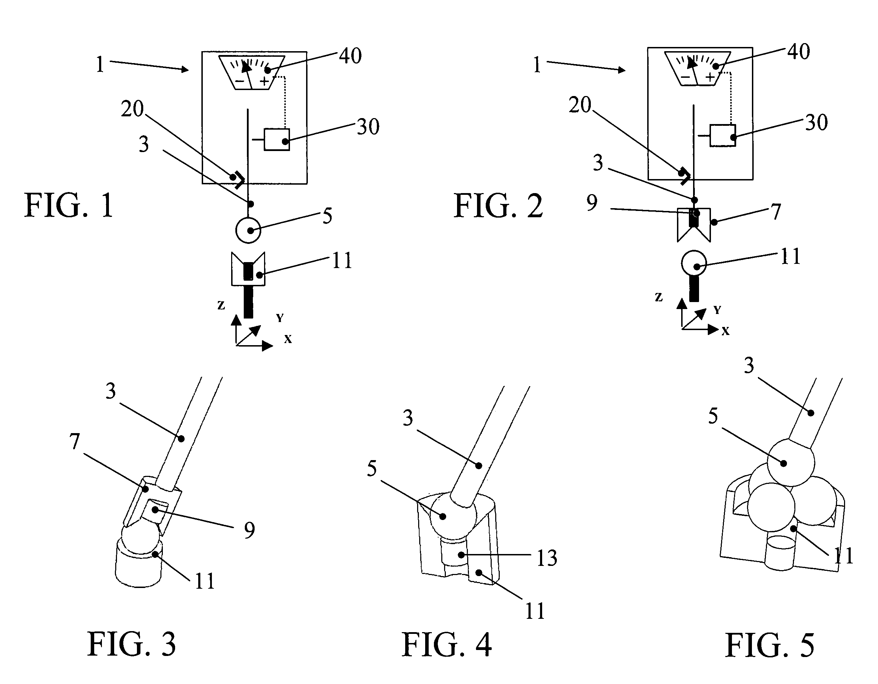

With reference to Figures 1 and 2, it can be noted that the three-dimensional tactile tracer point 1 with magnetic support according to the present invention comprises:
- a transmitting element of position information of the supporting element;
- a magnetic suspension system 20 of the transmitting element of position information;
- a measuring system 30 for deflections and movements0 of the transmitting element of position information; and
- a system 40 for communicating to the operator the deflection of the transmitting element of position information and the verse thereof.

Funtion of the transmitting element of position information is withdrawing, through a precise and repeatable three-dimensional contact with the element to be adjusted, the position of this latter one and transferring it, through its variations in position and attitude, inside the tactile tracer point 1, where there are the real sensors constituting the measurement system 30.

For such purpose, the element has to transmit the position in an univocally and geometrically determinable way from the position of the measured element to the measurement system 30.

In the preferred embodiment of the tactile tracer point 1 according to the present invention shown in the Figures, the transmitting element of position information is composed of a rod 3 having high cilindricity, an end of which is provided with a sphere 5 of ferromagnetic material which is perfectly concentric to the axes of the rod 3 itself.

Alternatively, the sphere 5 could be replaced by a receptacle 7 having a tapered hollow section, of non-ferromagnetic material, integrating a magnetic element 9 in its central position.

The sphere 5 or the receptacle 7 of the rod 3 is adapted to be placed in contact with a complementary element 11 incorporated in the adjustable supporting element, conformed in such way that, between them, a strength is created which binds them individualising only a possible point in the space in which the strength is balanced by the reactions, independently from the angular attitude of the first one in comparison with the latter. The two elements are bound around three degrees of freedom in comparison with the triad of reference axis X, Y and Z shown in FIGs. 1 and 2, leaving them free to assume whatever relative position in the three degrees of freedom of rotation around X, Y, Z.

As a non-limiting example, FIG. 3, 4 and 5 show some possible embodiments of the joining between rod 3 and adjustable supporting element; particularly:
- FIG. 3 shows a configuration in which the rod 3 is provided with a tapered hollow receptacle 7 integrating a magnetic element 9 and the complementary element 11 of the adjustable supporting element is a sphere;
- FIG. 4 shows a configuration in which the rod 3 is provided with a sphere 5 and the complementary element 11 of the adjustable supporting element is a tapered hollow receptacle integrating a magnetic element 13; and
- FIG. 5 shows a configuration in which the rod 3 is provided with a sphere 5 of ferromagnetic material and the complementary element 11 of the adjustable supporting element is a receptacle having three tangent spheres.

However, whatever the configuration of the connection between the terminal element of the rod 3 and the adjustable supporting element is, an object of the present invention is providing that such connection happens through two geometrically defined shapes placed in contact between them, a first geometric form being defined on the end of the rod 3 and a second geometric form being defined by the complementary element 11 of the adjustable supporting element and held between them in order to be bound between them around three degrees of freedom X, Y and Z, but in the meantime free in the three degrees of freedom of the rotations around axes X, Y and Z with the purpose of continuously providing deviation information from the position to adjust the position thereof. Such situation can be obtained by using, as already shown, magnetic strengths produced by suitable means, but it is clear that an adqeuate system with spring and elastic strengths canalso be used, which maintains the end of the rod 3 in contact with the complementary element 11 of the adjustable supporting element, conferring the above-mentioned desired kinematic characteristics.

The magnetic suspension system 20 is composed of two magnetic elements 20a, 20b with cylindrical shape placed respectively at 90° in the plan XY and rigidly connected to the structure of the tactile tracer point 1.

The magnetic elements 20a, 20b act as double fulcrum for the rod 3, defining two orthogonal axes of forced support, composed of the tangency of the cylinder of the rod 3, creating a small angle with the axes Z of the sensor, with the two magnetic elements 20a, 20b lying in plan XY.

The contact between the rod 3 and the cylindrical magnetic elements 20a, 20b is guaranteed by the attraction strength of the magnetic elements 20a, 20b themselves towards the rod 3, that has to be greater than the friction strength of the rod 3 itself on the other magnetic element of the couple. For normal contact conditions between the surfaces of the rod 3 and the magnetic elements 20a, 20b, the friction is meaningfully lower than the attraction strength in the ratio of by least 1/5 considering the worse case of sliding friction. It must be considered that in practice, generally the friction will tend to be of the rolling type and therefore still lower than at least another order of magnitude.

The remaining degrees of freedom left to the rod 3 are four:
- the rotation of the rod 3 around the axes of the first magnetic element 20a;
- the rotation of the rod 3 around the axes of the second magnetic element 20b;
- the axial sliding of the rod 3 along its own axes, preserving the attitude in comparison with the plan defined by the axes of the two magnetic elements 20a, 20b; and
- the rotation of the rod 3 around its own axis.

Of the four above-mentioned degrees of freedom, the last one is not strictly necessary for the operation of the tactile tracer point 1, but it enables the solution of the sliding frictions during the movement of the rod 3, maintaining the simultaneous contact with the two magnetic elements 20a, 20b and with the complementary element 11 of the adjustable supporting element.

The existence of this fourth degree of freedom is in practice a trouble for the measurement system 30 because the system itself does not provides for its measure.

For such reason, the fourth degree of freedom must be neutralised, making its variation indifferent for measurement purposes. This can be obtained by minimising the cilindricity error of the rod 3 and the concentricity error of the sphere 5 in comparison with its axis. If the above assumptions are valid, within the searched measurement tolerances, it can be stated that the rotation of the rod 3 around its own axis do not generate effects on the measurement due to its shape of a "perfect" rotation solid in comparison with the degree of freedom which has to be eliminated.

It follows that, for the objects of the invention it can be assumed that the residual degrees of freedom are three, corresponding, through a sure kinematic relationship, to the three coordinates XYZ of the adjustable supporting element.

The measurement system 30 of the deflection and of the movements of the transmitting element of position information is composed of one or more sensors which are able to measure, with a compatible accuracy with the desired positioning tolerances, the side deflections of the end of the rod 3 and its axial movement.

Such sensors can be of a different nature according to the desired accuracy.

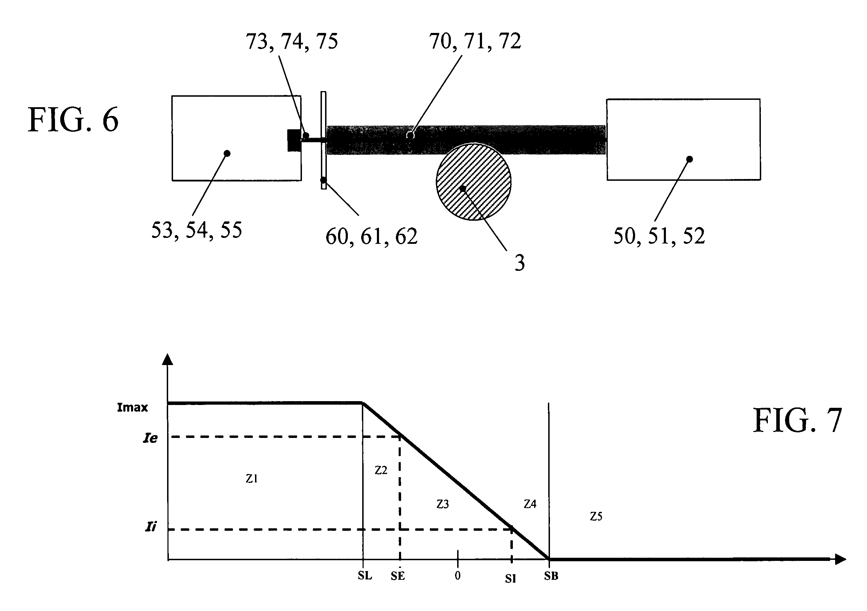

As shown in FIG. 6, the preferred embodiment of the tactile tracer point 1 according to the present invention provides for the use of three laser sources 50, 51, 52 each of which lasing a laser beam 70, 71, 72 having a diameter of about 1 mm.

The three sources 50, 51, 52 are arranged along the three axes XYZ of the tactile tracer point 1, each of which being opposite to a respective photodiode 53, 54, 55, adapted to sense the intensity of the laser beam 70, 71, 72 lased by its own source 50, 51, 52, in front of which a diaphragm 60, 61, 62 with a very little hole, typically having a diameter of 50 micrometers (the dimensions depends on the target tolerances), is placed. The diaphragm 60, 61, 62 generates a reduction of the laser beam 70 size, creating a collimated laser beam 73, 74, 75 having a certain section and a virtual target of the same sizes.

As a convention, it is useful to assume that the rod 3, in its resting condition, has its own side profile in the centre of the virtual beam obtained by prolonging back the collimated laser beam 73, 74, 75. The value of position 0 is arbitrarily assigned to this position.

If the signal provided by each photodiode 53, 54, 55, is diagrammed as function of the side movement of the rod 3, the characteristic shown in the diagram of FIG. 7 is obtained, in which the abscissa axis represents the movement of the rod 3 and the ordinate axes represents the current intensity.

The detection of the position of the rod 3 occurs measuring the current intensity emitted by each photodiode 53, 54, 55 and sensing its passage through meaningful thresholds.

With reference to FIG. 7 and to the following Table 1, starting from the situation in which the rod is completely out of each laser beam 70, 71, 72 and progressively entering in the beam, it crosses five zones, shown in FIG. 7 respectively with references Z1, Z2, Z3, Z4 and Z5:

**Table 1**

| ZONE | ROD POSITION | PHOTODIODE CURRENT |
|---|---|---|
| Z1 | Completely out of the laser beam 70, 71, 72 | *Imax* |
| Z2 | It begins to enter in the beam overcoming SL but it has not yet reached position SE | It begins to be reduced from *Imax* but it is still greater than the upper threshold *Ie* |
| Z3 | The rod 3 has overcome point SE (external threshold) but its profile stays between point SE and point SI (internal threshold) | Intermediate between *Ie* and *Ie* |
| Z4 | The rod 3 has covered the majority of the beam, overcoming point SI but not yet SB and therefore almost entirely darkening photodiode 53, 54, 55 | Smaller than *Ii* |
| Z5 | The rod overcomes point SB (dark threshold) covering completely laser beam 70, 71, 72 | Equal to the dark current of photodiode 53, 54, 55 |

The purpose of measuring the rod 3 position giving indications to the operator for adjusting the adjustable supporting element can be easily obtained by sending the current signal to a circuit with adjustable thresholds and sensing its passage through two critical thresholds: Ie and Ii.

The communication system 40 is composed of a display of a suitable nature adapted to communicate to the operator in which zone of its working field the rod 3 is, in comparison with the laser beams 70, 71, 72. A suitable control electronics transforms information about exceeding the thresholds into a visual indication showing, for example, the negative verse when there are situations represented by Zone Z1 and Zone Z2, the positive verse in Zone Z4 and in Zone Z5 and the indifference in Zone Z3.

In this way, a communication system 40 that can be simply and effectively read by an operator can be composed of two indicating LEDs for each reference axis which, when switched on, show to the operator in which direction the adjustable element must be moved. It can be provided that the contemporary lighting or flashing of both LEDs provides the indication of rod 3 in Zone 3 or in the tolerance band defined in comparison with its own reference axis.

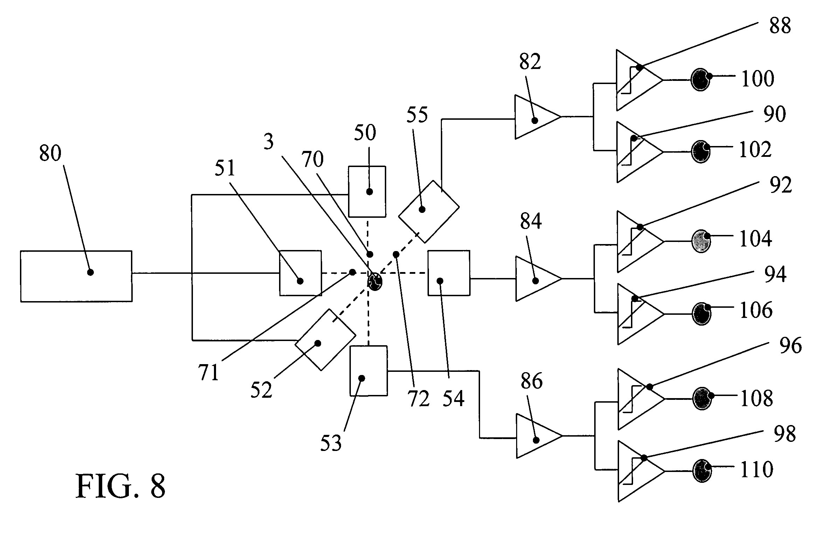

With reference to FIG. 8 in which an exemplification scheme of the measurement system 30 and the communication system 40 to the operator is shown, it can be noted that each photodiode 53, 54, 55 is connected to a respective current amplifier 82, 84, 86, each of which in turn sends the amplified current emanated by the photodiode to at least two threshold comparators 88, 90, 92, 94, 96, 98 which, depending on input current intensity values, will take care to switch on the appropriate respective LEDs 100, 102, 104, 106, 108, 110.

Using these indications, the operator can adjust the position of the adjustable supporting element in comparison with the three reference axes X, Y and Z, following the indications about movement direction or indifference provided by each of the three pairs of LEDs 100, 102, 104, 106, 108, 110 related to the respective reference axes.

In the preferred embodiment of the tactile tracer point 1 according to the present invention, the measurement system 30, as previously shown, is composed of three laser beams 50, 51, 52, each of which co-operating with a respective photodiode 53, 54, 55, but analogous functionalities can be obtained with one of the following configurations, herein provided as non-limiting examples:
- three low voltage displacement transducers (LVDT) measuring by contact or induction the movement of the upper end of the rod 3. The deflection signal of the LVDTs, suitably turned into an analogical or digital indication, can be transmitted to three indicators to show the direction and amount of displacement to the operator;
- three capacitive transducers. The output signal, suitably turned into an analogical or digital indication, can be transmitted to three indicators to show the direction and the amount of displacement to the operator;
- three pneumatic sensors. The output signal, suitably turned into an analogical or digital indication, can be transmitted to three indicators to show the direction and the amount of displacement to the operator;
- three comparators measuring by contact of their sensitive end with the surface of end of the rod 3. The indicative needles of the respective dials of the comparators will constitute the communication system 40 to the operator.

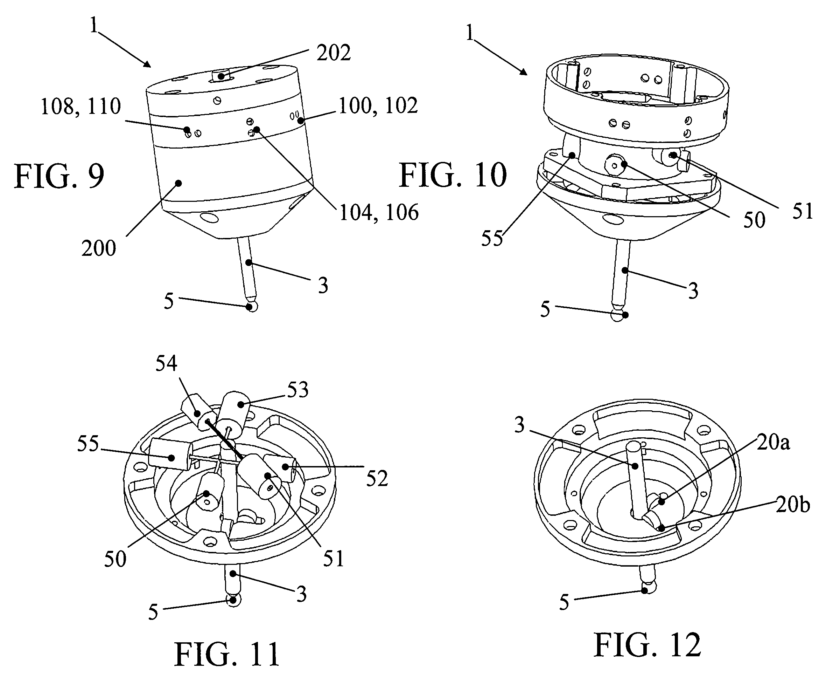

In Figures 9 to 12 it is possible to note a preferred embodiment of the tactile tracer point 1 according to the present invention as previously shown.

The tactile tracer point 1 is composed of a housing case 200 comprising a connection plug 202 to allow its operating connection, both mechanical and electrical one, possibly for the data transfer or the simple power supply of the components of the tactile tracer point 1, to a measurement tool or a machine tool; depending on specific requirements, such connection plug 202 can be shaped, for example, as a bayonet or screw connection. The magnetic suspension system 20 is arranged around a hole for passing the rod 3: in FIG. 11 and 12, the cylindrical magnetic elements 20a, 20b are clearly visible. Besides, in FIG. 12 the mutual positions of the laser sources 50, 51, 52 and the respective photodiodes 53, 54, 55 in comparison with the rod 3 are shown.

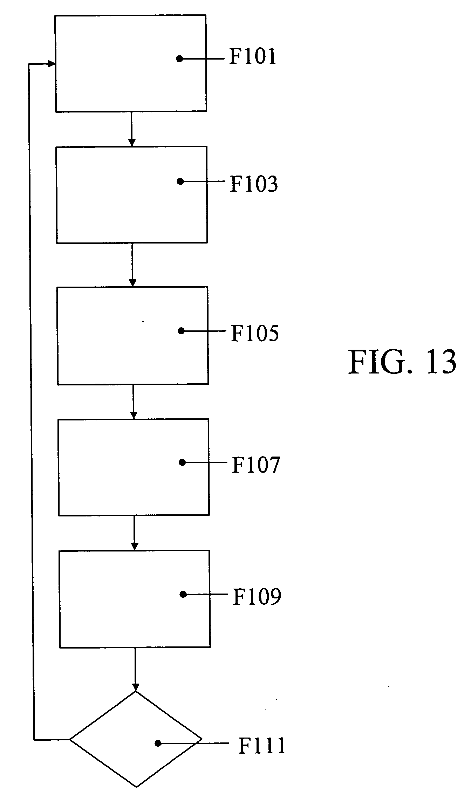

In FIG. 13 the steps of the measuring process of the position of the adjustable supporting element using the tactile tracer point 1 according to the present invention, are shown. Such process comprises the steps of:
1. through computations or drawing surveys or prescriptions, defining (F101) the coordinates in which the adjustable supporting element has to be positioned to perform its function as spatial reference;
2. assembling (F103), based on the aforesaid coordinates, the adjustable supporting element in the required position with an approximation of a few millimetres;
3. bringing (F105) the measurement tool, on which the tactile tracer point 1 according to the present invention is assembled, to the position defined in step F101;
4. engaging (F107) the transmitting system of the position information of the tactile tracer point 1 in the complementary receptacle 11 of the adjustable supporting element. Under this situation, the rod 3 of the tracer point 1 is deflected in comparison with its natural zero position and therefore it provides an indication through its own communication system 40 about the direction and possibly the amount of displacement that the operator will have to effect on the adjustable supporting element to bring it in the correct position;
5. adjusting (F109) the micropositioning axis of the adjustable supporting element until the indicators of the communication system 40 provide the indication of attainment of the tolerance zone (Zone 3);
6. repeating (F111) the previous steps for each adjustable supporting element to be positioned.

## Claims

1. Tactile tracer point (1) for detecting a position of adjustable supporting elements, **characterised in that** it comprises:
- a transmitting element for position information of said adjustable supporting element;
- a magnetic suspension system (20) of said transmitting element for position information;
- a deflection and movement measurement system (30) of said transmitting element for position information;
- a system (40) for communicating to an operator said deflection of said transmitting element for position information and a verse of said deflection; and
- mechanical and/or electric connection means of said tactile tracer point (1) to a measurement tool or a machine tool.

2. Tactile tracer point (1) according to claim 1, **characterised in that** said transmitting element for position information is a cylindrical rod (3) having at one its end a first defined geometric form adapted to get in contact with a second defined geometric form of a complementary element (11) of said adjustable supporting element, said contact being adapted to let at least three degrees of freedom of rotation related to a triad of orthogonal reference axes of said first geometric form in comparison with said second geometric form.

3. Tactile tracer point (1) according to claim 2, **characterised in that** said first geometric form and said second geometric form are maintained in contact through magnetic strengths.

4. Tactile tracer point (1) according to claim 2, **characterised in that** said first geometric form and said second geometric form are maintained in contact through elastic strengths.

5. Tactile tracer point (1) according to claim 2, **characterised in that** said first geometric form is a sphere (5).

6. Tactile tracer point (1) according to claim 2, **characterised in that** said first geometric form is a receptacle having a tapered hollow section (7).

7. Tactile tracer point (1) according to claim 5, **characterised in that** said sphere (5) is made of ferromagnetic material.

8. Tactile tracer point (1) according to claim 6, **characterised in that** said receptacle having a tapered hollow section is provided with a magnetic element (9).

9. Tactile tracer point (1) according to claim 2, **characterised in that** said second geometric form of said complementary element (11) of said adjustable supporting element is a tapered hollow receptacle integrating a magnetic element (13).

10. Tactile tracer point (1) according to claim 2, **characterised in that** said second geometric form of said complementary element (11) of said adjustable supporting element is a receptacle provided with three mutually tangent spheres.

11. Tactile tracer point (1) according to claim 2, **characterised in that** said second geometric form of said complementary element (11) of said adjustable supporting element is a sphere.

12. Tactile tracer point (1) according to claim 1, **characterised in that** said magnetic suspension system (20) is composed of at least two magnetic elements (20a, 20b) having cylindrical shape, mutually placed at 90° and adapted to determine a double supporting fulcrum for said rod (3) composed of a tangency of said rod (3) with each of said magnetic elements (20a, 20b) and to allow to said rod (3) at least three degrees of freedom of movement respect to a triad of orthogonal reference axes.

13. Tactile tracer point (1) according to claim 1, **characterised in that** said deflection and movement measurement system (30) of said transmitting element for position information is composed of at least three laser sources (50, 51, 52) each of which lasing a laser beam (70, 71, 72) passing for a respective diaphragm (60, 61, 62) and creating a collimated laser beam (73, 74, 75), an intensity of said laser beam (70, 71, 72) being detected by a respective photodiode (53, 54, 55), a current intensity being emitted by each photodiode (53, 54, 55) depending on said intensity of said laser beam (70, 71, 72) and said intensity of said laser beam (70, 71, 72) depending on an interference among said rod (3) and said laser beam (70, 71, 72).

14. Tactile tracer point (1) according to claim 1, **characterised in that** said deflection and movement measurement system (30) of said transmitting element for position information is composed of at least three low tension displacement transducers (LVDT) measuring, by contact or induction, a movement of said rod (3) producing at least three current signals having intensity depending on said movement.

15. Tactile tracer point (1) according to claim 1, **characterised in that** said deflection and movement measurement system (30) of said transmitting element for position information is composed of at least three capacitive transducers measuring a movement of said rod (3) producing at least three current signals having an intensity depending on said movement.

16. Tactile tracer point (1) according to claim 1, **characterised in that** said deflection and movement measurement system (30) of said transmitting element for position information is composed of at least three pneumatic sensors measuring a movement of said rod (3) producing at least three current signals having intensity depending on said movement.

17. Tactile tracer point (1) according to claim 1, **characterised in that** said communication system (40) to an operator of said deflection of said transmitting element of position information and a verse of said deflection includes processing means of said current intensities and displaying means of an indication of said verse.

18. Tactile tracer point (1) according to claim 17, **characterised in that** said processing means comprise at least three current amplifiers (82, 84, 86) arranged in parallel mode, each of said current amplifiers (82, 84, 86) emitting a current to at least two respective threshold comparators (88, 90, 92, 94, 96, 98).

19. Tactile tracer point (1) according to claim 17 or 18, **characterised in that** said displaying means of an indication of said verse comprise at least one LED (100, 102, 104, 106, 108, 110) electrically connected to each of said threshold comparators (88, 90, 92, 94, 96, 98), each of said LEDs (100, 102, 104, 106, 108, 110) being switched on depending on a values of intensity of said current input in each of said threshold comparators (88, 90, 92, 94, 96, 98).

20. Tactile tracer point (1) according to claim 1, **characterised in that** said connection means are a bayonet-type connection plug (202).

21. Tactile tracer point (1) according to the claim 1, **characterised in that** said connection are a screw-type connection plug (202).

22. Measuring process of a position of said adjustable supporting element using a tactile tracer point (1) according to claims 1 to 21, **characterised in that** it comprises the steps of:
- defining (F101) the coordinates in which said adjustable supporting element has to be positioned to perform its function as spatial reference;
- assembling (F103) said adjustable supporting element in a position approximately defined by said coordinates;
- bringing (F105) said tactile tracer point (1) connected to said measurement tool or said machine tool to said coordinates;
- engaging (F107) said system for transmission of the position information in said complementary receptacle (11) of said adjustable supporting element;
- adjusting (F109) a micropositioning axis of said adjustable supporting element according to verse indications of said communication system (40) and until said communication system (40) provided an indication of correct positioning;
- repeating (F111) the previous steps for each of said adjustable supporting elements to be positioned.
